# EUROPEAN PATENT APPLICATION

(11) **EP 4 144 584 A1**
(43) Date of publication of application: **08.03.2023**
(21) Application number: 21218191.1
(22) Date of filing: 29.12.2021
(51) Int. Cl.: B60P 1/64

(54) **CONTAINER VEHICLE PROVIDED WITH GUIDES FOR GUIDING A CONTAINER**

(30) Priority: 22.12.2020 NL 2027196
(71) Applicant: VDL Containersystemen B.V., 5527 AJ Hapert (NL)
(72) Inventor: van de WOUW, Adrianus Marinus Jacobus, 5527 BR Hapert (NL)
(74) Representative: Verhees, Godefridus Josephus Maria

(57) **Abstract**

A container vehicle has a tipping axle 21 about which a container can tip over while being pulled onto the chassis and lowered from the chassis. Two roller beds 13 are present on the tipping axle 21 for guiding the edges of the container. The roller beds 13 each have a number of rollers 17 next to each other, which rollers are present in a rectangular frame 19 which is mounted on a bush 23. This bush is rotatable and slidable on the end of the tipping shaft 21. As a result, the roller bed can first be shifted from the operating position, indicated by 13, to a position next to the mudguard 6 and then in this position turned around the tipping shaft, indicated by 13'. Subsequently, the roller bed can be slid back to the rest position above the mudguard 6. Being slidable of the roller bed 13 makes it possible for it to be present close to the mudguard 6, so that a more compact construction can be made.

## Description

### Technical field of the invention

The invention relates to a container vehicle for transporting a container, comprising:
- a chassis,
- wheels connected to the chassis,
- securing elements connected to the chassis and being at places where the corners of the container are located during the presence of the container on the chassis, and
- two guides connected to the chassis for guiding the edges of the container while pulling the container onto the chassis and lowering the container from the chassis,
wherein each guide being rotatably on a tipping shaft and being rotatable between an operating position in which the guide is substantially above the tipping shaft and a rest position in which the guide is substantially below the tipping shaft.

Such container vehicles are suitable for transporting a standard hooklift container as well as an ISO container. A hooklift container is a container that can be coupled with a hook present on an arm and the arm can be moved to pull the container onto the chassis. An ISO container is a container with standard dimensions according to an ISO standard.

The standard hooklift container is equipped with guides so that the container can be rolled over rollers present on an axle. The ISO container is not provided with guides and is guided with the side edges over the guides of the container vehicle during pulling on the support frame and lowering it from the support frame.

The guides of the container vehicle each have a number of rollers next to each other and which are rotatably connected to a support structure.

### Background of the invention

In other known container vehicles, the guide is designed as a roller bed which can be divided. The parts of the roller bed are disconnected for the handling of standard hook-lift containers and coupled when an ISO container is being handled. For this, a part of the roller bed must be lifted and then a pin must be manually fitted to attach both parts to each other. This is a fairly heavy and ergonomically unfavorable operation.

A container vehicle according to the preamble of claim 1 is known from GB2332425A. In this known container vehicle, the guide forms a whole and only needs to be turned about the tipping shaft, which requires less force than for lifting a part of the guide.

### Summary of the invention

An object of the invention is to provide a container vehicle of the type described in the preamble, wherein the guides take up little space in the stowed position. To this end, the container vehicle according to the invention is characterized in that the guide is also slidable on the rotary axis in the axial direction of the rotary axis. The entire guide can be pulled out and then turned in front of the rear wheel to the other position and then pushed back again. In this way the guide can be close to the rear wheel in the rest position, so that it takes up little space in the stowed situation.

Mudguards are preferably present above the rear wheels, so that in the rest position the guide is in a position in which the rollers face the mudguard and are at a small distance from the mudguard.

The guide is preferably provided with a bush (tube piece) which is rotatably and slidably on the tipping shaft. The supporting construction with the rollers is herein preferably fixed on the bush.

In order to prevent the guide from sliding in axial direction in the operating position, the container vehicle is preferably provided with locking means which lock the guide in the operating position against shifting in axial direction about the tipping shaft. Preferably, these locking means comprise a rod which is provided with a head at a first end and which is fixed at a second end to the tipping shaft. In this case, the guide is provided with a slot through which this rod protrudes. This slot is so narrow that the head attached to the rod cannot pass through. The slot connects with one end to a hole that is large enough for the head attached to the rod to be inserted through it. As a result, the guide can only be shifted in axial direction after the guide has been turned to a position in which the hole is in front of the head.

Preferably, on each guide being one of the securing elements for securing a corner of an ISO container. The securing elements are preferably formed by generally known, so-called twistlocks.

### Brief description of the drawings

The invention will be further elucidated below on the basis of an exemplary embodiment of the container vehicle according to the invention shown in the drawings, wherein:
Figure 1 shows a container vehicle provided with guides according to the invention;
Figure 2 is the rear part of the container vehicle shown in Figure 1 with a roller bed in the operating position and a roller bed in the rest position;
Figure 3 is a detail of the container vehicle shown in Figure 1 near the left rear wheel with the guide in operating position;
Figure 4 is a detail of the container vehicle shown in Figure 1 near the right rear wheel with the guide in rest position;
Figure 5 is a detail of the container vehicle shown in Figure 1 near the left rear wheel with the guide in the operating position and in a position during rotation to the rest position; and
Figure 6 is a detail of the locking means for locking the guide against axial shifting.

### Detailed description of the drawings

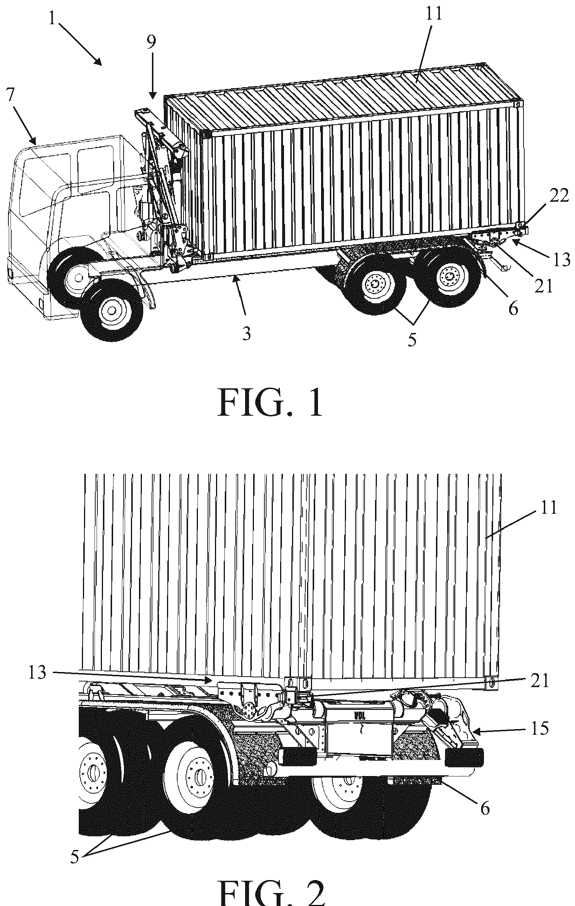

Figure 1 shows an embodiment of the container vehicle according to the invention. The container vehicle 1 has a chassis 3 and wheels 5 connected thereto, a cabin 7 and a device for pulling a container 11 onto the chassis. This device has a hook arm 9 which can be coupled to the container. A tipping shaft 21 about which the container 11 can tilt while being pulled onto the chassis and lowered from the chassis, is connected to the chassis 3 at the rear of the container vehicle. At both ends of the tipping shaft 21 there are two guides for guiding the edges of the container 11 during the pulling of the container onto the chassis and lowering the container from the chassis. These guides are formed by roller beds 13 which are rotatable about rotation axes formed by the ends of the tipping shaft 21.

The container vehicle 1 is further provided with securing elements 22, in this embodiment designed as twistlocks, which are connected to the chassis and are present at places where the corners of the container 11 are located during the presence of the container 11 on the chassis. One of the securing elements 22 is present on each roller bed 13.

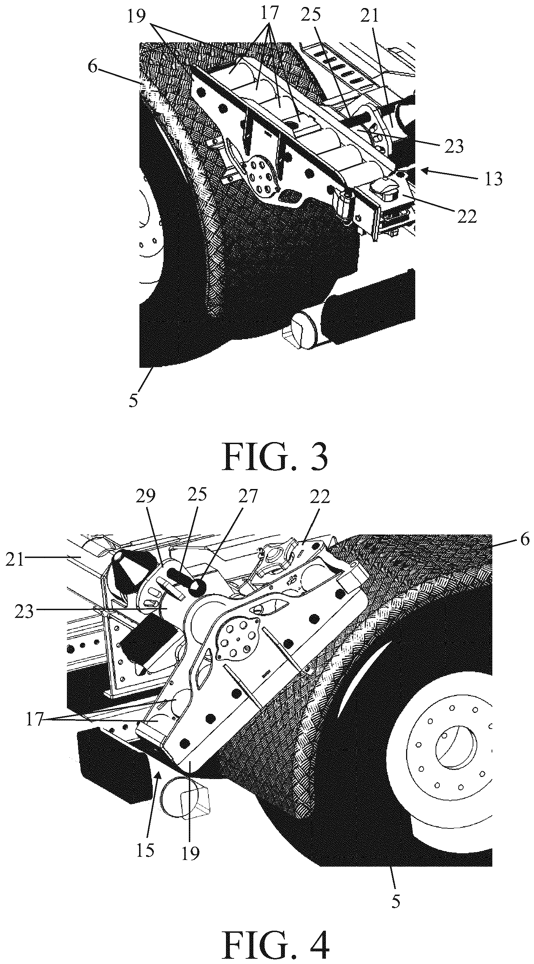

In figure 2 the rear part of the container vehicle is shown enlarged. Each roller bed 13 is rotatably present on the tipping shaft 21 and is rotatable between an operating position in which the roller bed 13 is located substantially above the tipping shaft 21 and a rest position in which the roller bed 15 is located substantially below the tipping shaft 21 at a small distance above the mudguard. 6. In figure 2 on the left side the roller bed 13 is present in the operating position and on the right side the roller bed 15 is present in the rest position. These two positions are shown enlarged in figures 3 and 4 respectively.

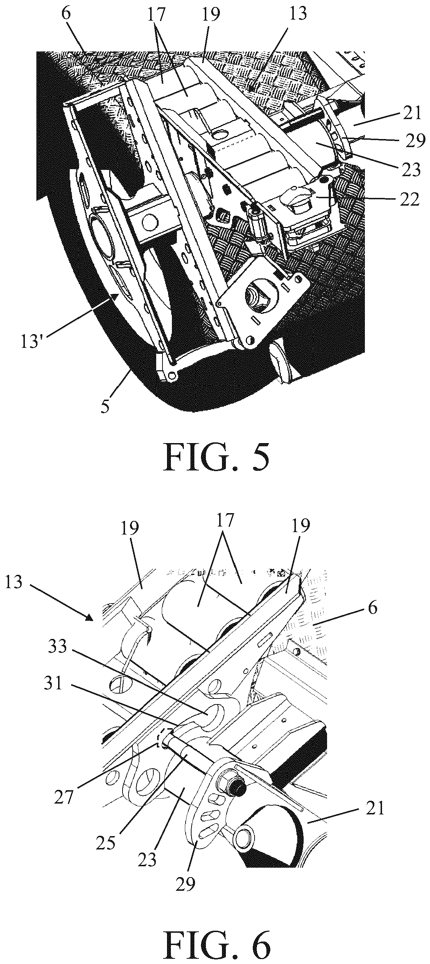

The roller beds 13 and 15 each have a number of rollers 17 present next to each other and which are rotatably connected to a supporting structure. The support structure is formed by a rectangular frame 19 which is mounted on a bush 23. This bush is rotatably present on the end of the tipping shaft 21. The bush 23 can also be displaced over the tipping shaft 21 in axial direction. As a result, the roller bed 13, from the position shown in figure 3, can first be shifted to next to the mudguard 6 and rotated in this position about the tipping shaft 21, this is the position indicated by 13' in figure 5. The roller bed can then be pushed back to the rest position above the mudguard 6. This position is shown in figure 4. The slidability of the roller beds 13 and 15 makes it possible for it to be present close to the mudguard 6 in both the operating position and the rest position, so that a more compact construction can be achieved.

In order to prevent the roller bed 13 from sliding in the axial direction in the operating position, the roller bed 13 is secured against shifting in this position by locking means. These locking means are formed by a rod 25 which is provided at a first end with a head 27 and which is secured at a second end to a plate 29 fixed to the tipping shaft 21, see figure 6. The roller bed 13 is provided with a slot 31 through which the rod 25 protrudes. The slot 31 is so narrow that the head 27 attached to the rod 25 cannot pass through. The roller bed is further provided with a hole 33 to which the slot 31 is connected with one end. The hole 33 is so large that the head 27 attached to the rod 25 can be passed through it. In order to be able to shift the roller bed 13, it must first be turned about the tipping shaft 21 until the hole 33 is present in front of the head 27 of the rod 25. In this position the roller bed 13 can be displaced in axial direction to a position next to the mudguard where it can be turned.

Although the invention has been elucidated in the foregoing with reference to the drawings, it should be noted that the invention is by no means limited to the embodiment shown in the drawings. The invention also extends to all embodiments deviating from the embodiment shown in the drawings within the framework defined by the claims. For example, the guides can also be designed as slide plates instead of the roller beds shown here. The axial displacement of the roller beds (guides) can also take place mechanically, for instance by means of a spring or (pneumatic) cylinder.

## Claims

1. A container vehicle (1) for transporting a container, comprising:
- a chassis (3),
- wheels (5) connected to the chassis (3),
- securing elements (22) connected to the chassis (3) and being at places where the corners of the container (11) are located during the presence of the container (11) on the chassis (3), and
- two guides (13, 15) connected to the chassis (3) for guiding the edges of the container (11) while pulling the container onto the chassis (3) and lowering the container (3) from the chassis (3),
wherein each guide (13, 15) being rotatably on a tipping shaft (21) and being rotatable between an operating position in which the guide (13) is substantially above the tipping shaft (21) and a rest position in which the guide (15) is substantially below the tipping shaft (21),
**characterized in that** the guide (13, 15) is also slidable on the tipping shaft (21) in the axial direction of the tipping shaft.

2. Container vehicle (1) according to claim 1, **characterized in that** the guide (13, 15) comprises a bush (23) which is rotatably and slidable on the tipping shaft (21).

3. Container vehicle (1) according to claim 1 or 2, **characterized in that** the container vehicle (1) comprises locking means (25-33) which in the operating position prevents the guide (13, 15) from being shifted in axial direction about the tipping shaft (21).

4. Container vehicle (1) according to claim 3, **characterized in that** the locking means comprise a rod (25) provided at a first end with a head (27) and fixed at a second end to the tipping shaft (21) and that the guide (13, 15) is provided with a slot (31) through which the rod (25) protrudes, which slot is so narrow that the head (27) attached to the rod cannot pass through, and which slot (31) with one end is connected to a hole (33) that is large enough to allow the head (27) attached to the rod (25) to be passed through.

5. Container vehicle (1) according to any one of the preceding claims, **characterized in that** it comprises mudguards (6) which are above the rear wheels (5), wherein in the rest position the guide (15) a guide side of the guide is faced towards the mudguard (6) and this guide side is at a small distance from the mudguard (6).

6. Container vehicle (1) according to one of the preceding claims, **characterized in that** each guide (13, 15) is provided with one of the securing elements (22).
